## Europäisches Patentamt

## European Patent Office

## Office européen des brevets

(11) Veröffentlichungsnummer: **0 136 462**
**B1**

(12) # EUROPÄISCHE PATENTSCHRIFT

(45) Veröffentlichungstag der Patentschrift:
23.09.87

(51) Int. Cl.⁴: **G 02 B 27/30**

(21) Anmeldenummer: **84109104.4**

(22) Anmeldetag: **01.08.84**

(54) · Optisches Sytem zur Justierung verschiedener optischer Achsen zueinander.

(30) Priorität: **06.08.83 DE 3328518**

(43) Veröffentlichungstag der Anmeldung:
**10.04.85 Patentblatt 85/15**

(45) Bekanntmachung des Hinweises auf die Patenterteilung:
**23.09.87 Patentblatt 87/39**

(84) Benannte Vertragsstaaten:
**DE FR GB IT NL**

(56) Entgegenhaltungen:
**DE-B-2 722 796**
**GB-A-1 093 641**

**Optik für Konstrukteure, H.NAUMANN, 2.Auflage (1960) Wilhelm Knapp-Verlag (DE), Seiten 140,141**

(73) Patentinhaber: **Firma Carl Zeiss, D-7920 Heidenheim (Brenz) (DE)**
Patentinhaber: **CARL- ZEISS- STIFTUNG trading as CARL ZEISS, D-7920 Heidenheim (Brenz) (DE)**

(72) Erfinder: **Marx, Dieter, Ing. grad., Moltkestrasse 9, D-7080 Aalen (DE)**

## Beschreibung

Die Erfindung betrifft ein optisches System zur Justierung der optischen Achsen von Ziel- und Visiergeräten mit mehreren Ausblicken in mehreren Wellenlängenbereichen unter Verwendung eines Hohlspiegels als kollimierendes Element gemäß DE-B- 2 722 796.

Die Justierung verschiedener optischer Achsen zueinander, die sogenannte "Achsharmonisierung" ist insbesondere bei Visieranlagen mit mehreren Ausblicken, den sogenannten "mehrkanaligen" Visieranlagen erforderlich. Es ist außerdem erforderlich, daß die Justierung unter harten Einsatzbedingungen, beispielsweise auf bewegten Fahrzeugen, erhalten bleibt und auf einfache Weise überprüft und gegebenenfalls wieder hergestellt werden kann.

Der Erfindung liegt die Aufgabe zugrunde, bei Ziel- und Visiergeräten mit verschiedenen optischen Achsen in mehreren Wellenlängenbereichen eine Vorrichtung zur Justierung der optischen Achsen zueinander anzugeben, die eine kurve Bauform hat.

Diese Aufgabe wird erfindungsgemäß durch ein optisches System gemäß Anspruch 1 gelöst.

Die mit der Erfindung erzielten Vorteile bestehen insbesondere darin, daß die von den Tripelprismen reflektierten Strahlen unempfindlich gegen Dejustierung sind und stets parallel zueinander verlaufen, und daß das optische System in einem großen Wellenlängenbereich verwendbar ist, ohne daß Farbfehler auftreten.

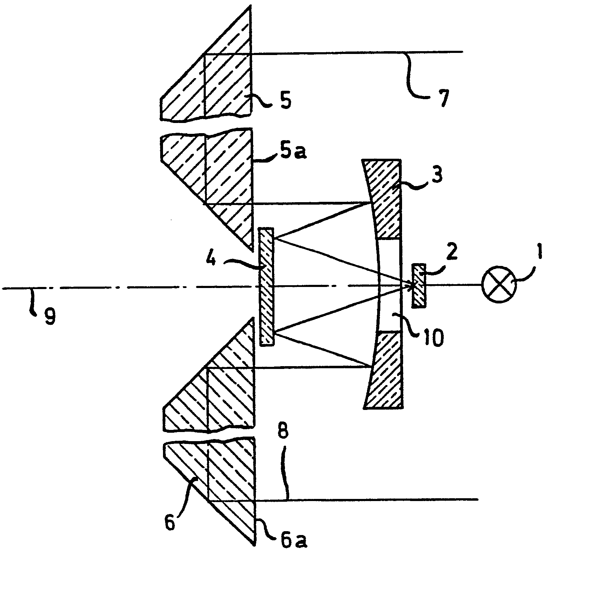

Ein Ausführungsbeispiel der Erfindung ist in der Zeichnung dargestellt und wird im folgenden näher beschrieben.

Die einzige Zeichnung zeigt eine schematische Darstellung des optischen Systems.

In der Darstellung ist mit 1 eine Lichtquelle bezeichnet, welche eine Meßmarke 2 beleuchtet. Anstelle einer Lichtquelle ist auch eine Wärmequelle denkbar. Die von der Meßmarke ausgehenden Strahlen durchsetzen die Lochblende 10 des Hohlspiegels 3, treffen auf den ebenen Spiegel 4 und werden von diesem in die reflektierenden Bereiche des Hohlspiegel 3 geworfen, von dem sie ins Unendliche projiziert werden. Durch die Verwendung der Tripelprismen 5, 6 werden die Strahlengänge 7, 8 unempfindlich gegen Dejustierung und verlaufen stets parallel zueinander. Der Spiegel 3 ermöglicht die Benutzung des als Kollimator wirkenden optischen Systems in einem großen Wellenlängenbereich, ohne daß Farbfehler auftreten. Die Tripelprismen 5, 6, die mit ihren Basisflächen 5a, 6a senkrecht und symmetrisch zur optischen Achse 9 angeordnet sind, können im Material der zu projizierenden Wellenlänge angepaßt werden. Wird die Meßmarke mit Infrarotstrahlen projiziert, dann wird für die Prismen Germanium verwendet, wird im sichtbaren Bereich des Lichtes projiziert, kann Glas verwendet werden.

## Patentansprüche

1. Optisches System zur Justierung der optischen Achsen von Ziel- und Visiergeräten mit mehreren Ausblicken in mehreren Wellenlängenbereichen unter Verwendung eines Hohlspiegels als kollimierenders Element, dadurch gekennzeichnet, daß auf der optischen Achse (9) in Richtung der für die Justierung verwendeten Strahlung vor dem Hohlspiegel (3) mit Lochblende (10) eine von einer Lichtquelle (1) beleuchtbare Meßmarke (2) und hinter dem Hohlspiegel (3) senkrecht und symmetrisch zur optischen Achse (9) ein ebener Spiegel (4) und zwei Tripelprismen (5, 6) angeordnet sind.

## Claim

1. Optical system for the adjustment of the optical axles of visual aiming and sighting devices with several outlooks for several ranges of wavelength, characterized by the fact that on the optical axle (9) a measuring mark (2) which is illuminated by a lightsource (1) is arranged in the direction of the incident light infront of a mirror lense (3) provided with a disc diaphragm (10) and that in said direction behind said mirror lens (3) a plane mirror (4) and two triples prisms (5,6) are arranged perpendicularly and symmetrically to said optical axle.

## Revendication

1. Système optique pour l'ajustement des axes optiques d'appareils de pointage et de visée comportant plusieurs viseurs dans plusieurs gammes de longueurs d'onde, avec utilisation d'un miroir concave comme élément de collimation, caractérisé en ce que l'élément de repérage (2), pouvant être éclairé par une source de lumière (1), est disposé sur l'axe optique (9) devant le miroir concave (3), présentant un diaphragme à orifice (10), en direction du rayonnement utilisé pour l'ajustement, et qu'un miroir plan (4) et deux prismes triples (5, 6) sont disposés perpendiculairement et symétriquement par rapport à l'axe optique (9) derrière le miroir concave (3) dans ladite direction.